# EUROPEAN PATENT SPECIFICATION

(11) **EP 2 963 456 B1**
(45) Date of publication and mention of the grant of the patent: **27.05.2020**
(21) Application number: 14757199.6
(22) Date of filing: 27.02.2014
(51) Int. Cl.: G02B 1/04, G02C 7/02, G02B 1/10, G02B 5/20

(54) **OPTICAL MATERIAL AND USE THEREOF**
OPTISCHES MATERIAL UND VERWENDUNG DAVON
MATÉRIAU OPTIQUE ET SON UTILISATION

(30) Priority: 27.02.2013 JP 2013036694
(43) Date of publication of application: 06.01.2016
(73) Proprietor: Mitsui Chemicals, Inc., Tokyo 105-7117 (JP)
(72) Inventor: KOJIMA, Kouya, Sodegaura-shi, Chiba 299-0265 (JP); TANAKA, Mamoru, I-48123 Ravenna (IT); OGAWA, Tatsuya, I-48123 Ravenna (IT)
(74) Representative: Mewburn Ellis LLP
(86) International application number: PCT/JP2014/054970
(87) International publication number: WO 2014/133110

(56) References cited:
- EP-A1- 0 274 844
- EP-A1- 1 497 375
- WO-A2-2008/024414
- JP-A- H09 194 536
- JP-A- 2004 124 062
- JP-A- 2004 124 062
- JP-A- 2004 504 481
- JP-A- 2007 535 708
- JP-A- 2008 105 225
- US-A1- 2003 170 467
- Ciba Specialty Chemicals: "Optical Brighteners", , 30 April 1999 (1999-04-30), XP055299815, Retrieved from the Internet: URL:http://www.mufong.com.tw/ciba/ciba_gui d/optical_brighteners.pdf [retrieved on 2016-09-05]

## Description

### TECHNICAL FIELD

The present disclosure relates to an optical material and uses thereof.

### BACKGROUND ART

In the related art, a fact that exposure to ultraviolet rays exerts a negative influence on the eye is regarded as an issue. Furthermore, in recent years, a fact that blue light, which is included in natural light or in light emitted from liquid crystal displays of office machines, displays of portable devices such as smartphones or cellular phones, and the like, exerts an influence on the eye and makes the eye feel fatigue or pain has become an issue. Therefore, it is required to reduce exposure of the eye to ultraviolet rays and blue light having a relatively short wavelength of about 420 nm.

Non-Patent Document 1 describes the influence of short-wavelength blue light of about 420 nm on the eye.

In this document, damage of retinal neuronal cells (rat R28 retinal neuronal culture cells) irradiated with blue LED lights having different peak wavelengths of 411 nm and 470 nm was verified. As a result, it was found that while irradiation (4.5 W/m²) of blue light having a peak wavelength at 411 nm caused death of the retinal neuronal cells within 24 hours, blue light having a peak wavelength at 470 nm caused no change in the cells even if the cells were irradiated with this light at the same dose. This result shows that in order to prevent eye injury, it is important to inhibit exposure of the eye to light having a wavelength of 400 nm to 420 nm.

Patent Document 1 describes an optical article which uses fullerenes as a blue light-absorbing component.

Patent Document 2 describes an anti-glare optical element which contains a pigment having a specific absorption wavelength and an ultraviolet light absorber. In the document, it is described that the anti-glare optical element can cut visible light region in a short-wavelength side.

Patent Document 3 describes a thermoplastic resin composition which contains a transparent thermoplastic resin, an ultraviolet light absorber having a specific absorption wavelength, and fine iron oxide particles, and a molded product obtained from the composition. In the document, it is described that the molded product has an excellent ability to absorb light having a wavelength of 420 nm and thus has an excellent eye protection effect.

### RELATED DOCUMENT

### PATENT DOCUMENT

[Patent Document 1] Japanese Unexamined Patent Publication No. 2007-93927
[Patent Document 2] Pamphlet of International Publication No. WO2012/165050
[Patent Document 3] Pamphlet of International Publication No. WO2006/087880

### NON-PATENT DOCUMENT

[Non-Patent Document 1] The European journal of neuroscience, vol.34, Iss.4, 548-58, (2011)

US 2003/0170467 A1 discloses a two-layered coating system having a UV absorber in an inner layer furthest away from a source of UV exposure, with a fluorescent material that reflects UV radiation back as blue light. The UV absorber in the inner layer is used in sufficient concentration to have a UV cut-off, which can be extended with the fluorescent material. The material has a light transmittance within a range of 300-800 nm of 10% or less, and a transmittance of light within a range of 420-800 nm of 90% or more.

EP 1 497 375 A1 discloses a polysulfone composition having a total luminous light transmittance of 84% or greater when measured on 0.1 inch thick specimens using ASTM D-1003. The specimens also meet at least one of the following conditions: 1) a yellowness index of less than about 5.0 as measured according to ASTM D-1925 on 0.1 inch thick specimens, and 2) a colour factor of less than about 25, where the colour factor is defined by a particular equation. Also disclosed is a polysulfone composition comprising a polysulfone, an organic phosphorous-containing melt stabilizer and at least one of: a blue to violet dye, and an organic optical brightener. The composition is used to form transparent molded articles.

### DISCLOSURE OF THE INVENTION

However, in the technique described in Patent Document 1, due to the broad visible light absorption spectrum caused by fullerenes, the obtained optical article is colored, and thus there is a problem in terms of appearance.

In the technique described in Patent Document 2, the anti-glare optical element has a high degree of absorption of 450 nm to 800 nm that a spectral luminous is high in a visible light region. Thereby, the obtained optical element such as a lens is colored. Therefore, there is room for improvement in appearance.

In the technique described in Patent Document 3, since fine iron oxide particles are contained in the molded product, there may be cases where the molded product is colored, and thus there is a problem in terms of appearance in the field that requires transparency such as that which uses a specular lens. In addition, a polycarbonate resin is used as the transparent thermoplastic resin, and thus there is room for improvement in optical properties such as the refractive index and the Abbe number.

The present invention can be described as follows.
[1] A plastic spectacle lens composed of an optical material including: a phosphor which has an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm; and an ultraviolet light absorber, in which a transmittance of the optical material measured at a thickness of 2 mm satisfies the following features (1) to (3) :
   (1) The light transmittance at a wavelength of 440 nm is 80% or higher,
   (2) The light transmittance at a wavelength of 420 nm is 70% or lower, and
   (3) The light transmittance at a wavelength of 410 nm is 5% or lower further including: a lens substrate; and optionally a film layer and a coating layer laminated over the lens substrate;
      in which at least one of the lens substrate, the film layer and the coating layer is obtained from a composition for an optical material which contains the phosphor having an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm, the ultraviolet light absorber, and a resin for optical material or a polymerizable compound;
      in which the resin for optical material is a poly (meth) acrylate, or a polyolefin; and
      in which the polymerizable compound is a combination of a polyisocyanate compound and a polyol compound, a combination of a polyisocyanate compound and a polythiol compound, or a polyepithio compound and/or a polythietane compound.
[2] The plastic spectacle lens described in [1], in which the ultraviolet light absorber is contained in a proportion of two or more times a weight of the phosphor.
[3] The plastic spectacle lens described in [1] or [2], in which the phosphor contains benzoxazoles and/or coumarins.
[4] The plastic spectacle lens described in any one of [1] to [3], in which the ultraviolet light absorber is at least one type selected from a benzotriazole-based compound, a benzophenone-based compound, and a salicylic acid ester-based compound.
[5] The plastic spectacle lens described in any one of [1] and [3] to [4], further including: a lens substrate; and a film layer and a coating layer which are optionally laminated over the lens substrate, in which the ultraviolet light absorber is contained in the vicinity of a surface of at least one surface of the lens substrate.

According to the present disclosure, it is possible to provide an optical material which exerts a strong effect of blocking from harmful ultraviolet rays to blue light of about 420 nm and has an excellent external appearance that is colorless and transparent. The optical material of the present disclosure has optical characteristics such as a high refractive index and a high Abbe number, is colorless and transparent, and thus has excellent appearance. In addition, effects of harmful light on the eyes are reduced. Therefore, the optical material can be appropriately used particularly as a plastic spectacle lens.

### DESCRIPTION OF EMBODIMENTS

In an optical material of the present invention, at a thickness of 2 mm, the light transmittance at a wavelength of 440 nm is 80% or higher, the light transmittance at a wavelength of 420 nm is 70% or lower, and the light transmittance at a wavelength of 410 nm is 5% or lower. Since such properties are satisfied, a strong effect in blocking a range from harmful ultraviolet rays to blue light having a wavelength of about 420 nm is obtained, and excellent colorless and transparent appearance is achieved.

The optical material of the present disclosure satisfies the above-described properties and may include a phosphor which has an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm, and an ultraviolet light absorber.

Since the optical material includes the phosphor having the above-described properties and the ultraviolet light absorber, a range from harmful ultraviolet rays to blue light having a wavelength of about 420 nm can be more effectively cut. Furthermore, due to a synergistic effect with blue light emissions from the phosphor, coloring of the optical material can be suppressed. Therefore, an optical material which is colorless and transparent and has excellent appearance can be obtained.

It is desirable that the ultraviolet light absorber is contained in a proportion of two or more times, and preferably three or more times the weight of the phosphor. Since the above-described amount of the ultraviolet light absorber is contained, the blue light emissions from the phosphor which may cause unnaturalness can be suppressed, and an optical material which is colorless and transparent can be obtained. In addition, from the viewpoint of effects on the mechanical strength and the like of the optical material, the ultraviolet light absorber is contained in a proportion of 1500 or less times the weight of the phosphor.

Hereinafter, the embodiment of the present disclosure will be described in detail.

In a first embodiment, an optical material is prepared by using a composition for an optical material which contains a phosphor and an ultraviolet light absorber is described. In a second embodiment, an optical material is prepared by using a composition for an optical material which contains a phosphor is described. In a third embodiment, an optical material is prepared by using a composition for an optical material which contains an ultraviolet light absorber is described.

### [First Embodiment]

The composition for an optical material of present embodiment includes a phosphor which has an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm, an ultraviolet light absorber, and a resin for optical material or a polymerizable compound (resin monomer). Hereinafter, each of the components is described in detail.

### [Phosphor]

The phosphor which is used in present embodiment has an excitation wavelength in a wavelength range from 220 nm to 500 nm and a maximum excitation wavelength in a range from 350 nm to 400 nm. Furthermore, the absorbed light causes fluorescence in a wavelength range from 380 nm to 650 nm, and the maximum fluorescence wavelength is in a range from 400 nm to 500 nm. The phosphor is composed of a fluorescent material. The phosphor may be a fluorescent material itself, may also be a mixture of a fluorescent material and other materials, and may also be another particulate material to which a fluorescent material adheres. The particulate material is not particularly limited, and may be a particulate organic polymer such as a polyurethane resin, a latex resin, a polyolefin resin, and a polyester resin, or a particulate inorganic material such as alumina, silica, glass, and zirconia.

The fluorescent material is not particularly limited as long as the fluorescent material is a pigment that satisfies the above-described fluorescence properties, and may employ 4,4'-diaminostilbene, 4,4'-distyryl-biphenylene, methylumbelliferone, coumarins, dihydroquinolinone, 1,3-diarylpyrazoline, naphthalimide, benzoxazoles having CH=CH bonds, benzisoxazoles, benzimidazoles, heterocyclic derivatives of pyrene, and the like. A combination thereof may also be used. Particularly, from the viewpoint of compatibility with fluorescence wavelengths, benzoxazoles or coumarins are preferable.

### [Ultraviolet Light Absorber]

It is preferable that the ultraviolet light absorber used in present embodiment does not absorb a visible light region, and a benzotriazole-based compound, a benzophenone-based compound, a salicylic acid ester-based compound, and the like are employed. Examples thereof include 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-5'-t-octylphenyl)benzotriazole, 2,4-dihydroxybenzophenone, 2-hydroxy-4-methoxybenzophenone, 2-hydroxy-4-n-octoxybenzophenone, 4-dodecyloxy-2-hydroxybenzophenone, 2,2',4,4'-tetrahydroxybenzophenone, 2,2'-dihydroxy-4,4'-dimethoxybenzophenone, phenyl salicylate, and methyl salicylate. In the present invention, it is preferable that one or more types of the ultraviolet light absorbers are used, and two or more different types of the ultraviolet light absorbers may be contained. Among these, the preferable ultraviolet light absorbers are a benzotriazole-based compound, a benzophenone-based compound, and a salicylic acid ester-based compound, and at least one selected therefrom may be used. The ultraviolet light absorbers have an excellent ultraviolet ray shielding effect and can suppress coloring of the optical material due to a synergistic effect with blue light emissions from the phosphor, and thus a colorless and transparent optical material (molded product) can be obtained.

The phosphor and the ultraviolet light absorber may be contained in a lens substrate or an optical film, which is described later. Furthermore, the phosphor and the ultraviolet light absorber may also be contained in a coating layer. As the film or the coating layer, those having polarization properties or photochromic properties may be used.

### [Resin for optical material or Polymerizable Compound]

In present embodiment, the composition for an optical material includes the resin for optical material or the polymerizable compound. It is preferable that the resin for optical material or a resin obtained from the polymerizable compound (hereinafter, both are simply referred to as "resin") is a transparent resin.

### (Resin for optical material)

As the resin for optical material, poly(meth)acrylate, a polyolefin, a cyclic polyolefin, polyallyl, polyurethane urea, a polyene-polythiol polymer, a ring-opening metathesis polymer, polyester, and an epoxy resin may be preferably used. These materials are materials having high transparency, and can be appropriately used for optical material uses. In addition, these materials may be used singly, and a composite material thereof may also be used.

A poly(meth)acrylate may include poly (meth) acrylate of alkane polyol such as ethylene glycol di(meth)acrylate, propylene glycol di(meth)acrylate, butylene glycol di(meth)acrylate, neopentyl glycol di(meth)acrylate, hexylene glycol di(meth)acrylate, trimethylolpropane tri(meth)acrylate, and pentaerythritol tetra(meth)acrylate,
polyoxyalkane polyol poly(meth)acrylate such as diethylene glycol di(meth)acrylate, triethylene glycol di(meth)acrylate, polyethylene glycol di(meth)acrylate, dipropylene glycol di(meth)acrylate, polypropylene glycol di(meth)acrylate, dibutylene glycol di(meth)acrylate, and dipentaerythritol hexa(meth)acrylate, and the like.

In the composition for an optical material of present embodiment, poly(meth)acrylate may be contained as the resin for optical material.

A polyolefin is produced by polymerization of at least one type of olefin selected from α-olefins in the presence of a well-known olefin polymerization catalyst such as a Ziegler-Natta catalyst, a metallocene catalyst, or a so-called post-metallocene catalyst. An α-olefin monomer may be a single component, and may also be obtained by copolymerization of composite components.

In the production of a polyolefin, the polymerization reaction of olefins may be performed by a liquid-phase polymerization method such as solution polymerization, suspension polymerization, or bulk polymerization, a vapor-phase polymerization method, or other well-known polymerization methods. In the production of a polyolefin, a liquid-phase polymerization method such as solution polymerization or suspension polymerization (slurry polymerization) is preferably used, and suspension polymerization (slurry polymerization) is more preferably used. As for the polymerization temperature and pressure conditions, well-known conditions may be applied.

The composition for an optical material of present embodiment may include a polyolefin as the resin for optical material.

A cyclic polyolefin is produced by polymerization of at least one type of cyclic olefin selected from cyclic olefins in the presence of a well-known olefin polymerization catalyst. A cyclic olefin monomer may be a single component, and may also be obtained by copolymerization of composite components. As a cyclic polyolefin, APEL™ manufactured by Mitsui Chemicals, Inc. has high transparency and thus may be appropriately used.

Polyallyl is produced by polymerization of at least one type of allyl group-containing monomer selected from allyl group-containing monomers in the presence of a well-known radical generating polymerization catalyst. As an allyl group-containing monomer, in general, allyl diglycol carbonate and diallylphthalate are commercially available, and thus can be appropriately used.

Polyurethane urea is a reaction product of a polyurethane prepolymer and a diamine hardener, and polyurethane urea which is sold by PPG Industries, Inc. as Trivex™ is a representative example. Polyurethane polyurea is a material having high transparency, and thus can be appropriately used.

A polyene-polythiol polymer is a polymeric product obtained by addition polymerization and ethylene chain polymerization of a polyene compound which has two or more ethylene functional groups in a single molecule and a polythiol compound which has two or more thiol groups in a single molecule.

In a polyene-polythiol polymer, a polyene compound may include an allyl alcohol derivative, esters of (meth) acrylic acid and a polyol, urethane acrylate, divinylbenzene, and the like may be employed. One type or two or more types thereof may be used. As an allyl alcohol derivative, triallyl isocyanurate, triallyl cyanurate, diallyl maleate, diallyl fumarate, diallyl adipate, diallyl phthalate, triallyl trimellitate, tetraallyl pyromellitate, glycerin diallyl ether, trimethylol propane diallyl ether, pentaerythritol diallyl ether, sorbitol diallyl ether, and the like. In esters of (meth)acrylic acid and a polyol, the polyol may include ethylene glycol, propylene glycol, 1,4-butanediol, 1,6-hexanediol, glycerin, trimethylol propane, pentaerythritol, sorbitol, and the like.

A ring-opening metathesis polymer is a polymer which is obtained by ring-opening polymerization of cyclic olefins using a catalyst. Cyclic olefins which enable ring-opening polymerization are not particularly limited as long as the cyclic olefins are olefins having a cyclic structure. Cyclic olefins may include monocyclic cycloalkenes, monocyclic cycloalkadienes, polycyclic cycloalkenes, and polycyclic cycloalkadienes which have 3 to 40 carbon atoms. Specific examples of monocyclic cycloalkenes include cyclobutene, cyclopentene, cyclohexene, and cyclooctene. Specific examples of monocyclic cycloalkadienes include cyclobutadiene, 1,3-cyclopentadiene, 1,3-cyclohexadiene, 1,4-cyclohexadiene, and 1,5-cyclooctadiene. As polycyclic cycloalkenes, for example, norbornene, and tetracyclo [6.2.1.1^{3,6}.0^{2,7}] dodeca-4-ene may employed. As polycyclic cycloalkadienes, for example, norbornadiene and dicyclopentadiene may be employed. Cyclic olefins may also be substituted by oxygen or sulfur, halogen, or the like. Furthermore, cyclic olefins may also be hydrogenated for use. For example, ARTON™ manufactured by JSR Corporation and the like may be employed as an appropriate example.

Polyester is obtained by condensation polymerization in the presence of a Lewis acid catalyst represented by an antimony or germanium compound or a well-known polyester production catalyst such as an organic acid or an inorganic acid. Specifically, polyester is formed of one type or two or more types selected from polycarboxylic acids including dicarboxylic acids and an ester-forming derivative thereof and one type or two or more types selected from polyols including glycol, is formed of hydroxy carboxylic acid and an ester-forming derivative thereof, or is formed of a cyclic ester.

Dicarboxylic acids may include saturated aliphatic dicarboxylic acid such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimer acid and an ester-forming derivative thereof,
unsaturated aliphatic dicarboxylic acid such as fumaric acid, maleic acid, and itaconic acid and an ester-forming derivative thereof, and
aromatic dicarboxylic acid such as orthophthalic acid, isophthalic acid, terephthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyletherdicarboxylic acid, 1,2-bis(phenoxy) ethane-p,p'-dicarboxylic acid, pamoic acid, and anthracenedicarboxylic acid and an ester-forming derivative thereof.

Among the dicarboxylic acids, terephthalic acid and naphthalenedicarboxylic acid, particularly, 2,6-naphthalenedicarboxylic acid are preferable in terms of the physical properties and the like of the obtained polyester, and other dicarboxylic acids are included as componenets as necessary. As polycarboxylic acids other than the dicarboxylic acids, ethanetricarboxylic acid, propanetricarboxylic acid, butanetetracarboxylic acid, pyromellitic acid, trimellitic acid trimesic acid, 3,4,3',4'-biphenyltetracarboxylic acid, an ester-forming derivative thereof, and the like may be employed.

A glycol may include aliphatic glycol such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexane dimethanol, 1,3-cyclohexane dimethanol, 1,4-cyclohexane dimethanol, 1,4-cyclohexane diethanol, 1,10-decamethylene glycol, 1,12-dodecanediol, polyethylene glycol, polytrimethylene glycol, and polytetramethylene glycol, and aromatic glycol such as hydroquinone, 4,4'-dihydroxy bisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycol obtained by adding ethylene oxide to such glycols.

Among the glycols, ethylene glycol, 1,3-propylene glycol, 1,4-butylene glycol, and 1,4-cyclohexanedimethanol are preferable. As polyols other than the glycols, trimethylolmethane, trimethylolethane, trimethylolpropane, pentaerythritol, glycerol, hexanetriol, and the like may be employed.

A polyester may preferably include polyethylene terephthalate, polybutylene terephthalate, polypropylene terephthalate, poly(1,4-cyclohexane dimethylene terephthalate), polyethylene naphthalate, polybutylene naphthalate, polypropylene naphthalate, and a copolymer thereof.

An epoxy resin is a resin obtained by ring-opening polymerization of an epoxy compound. An epoxy compound may include a phenol-based epoxy compound obtained by the condensation reaction between a polyhydric phenol compound such as bisphenol A glycidyl ether and bisphenol F glycidyl ether and an epihalohydrin compound;
an alcohol-based epoxy compound obtained by the condensation of a polyol compound such as hydrogenated bisphenol A glycidyl ether, hydrogenated bisphenol F glycidyl ether, and cyclohexane dimethanol and an epihalohydrin compound;
a glycidyl ester-based epoxy compound obtained by the condensation of a polyvalent organic acid compound such as 3,4-epoxycyclohexylmethyl-3',4'-epoxycyclohexanecarboxylate and 1,2-hexahydrophthalic acid diglycidyl ester and an epihalohydrin compound;
an amine-based epoxy compound obtained by the condensation of a primary or secondary amine compound and an epihalohydrin compound; and the like may be employed. In addition, an aliphatic polyvalent epoxy compound including vinylcyclohexenediepoxide such as 4-vinyl-1-cyclohexanediepoxide, and the like.

### (Polymerizable Compound)

In present embodiment, the polymerizable compound may be contained in the composition for an optical material. A resin obtained from the polymerizable compound may preferably include polyurethane, polythiourethane, and polysulfide. These materials have high transparency, and can be appropriately used for optical material uses.

Polyurethane can be obtained from a polyisocyanate compound and a polyol compound which are polymerizable compounds. Polythiourethane can be obtained from a polyisocyanate compound and a polythiol compound which are polymerizable compounds. In the composition for an optical material, the following polymerizable compounds may be included to form these resins.

A polyisocyanate compound may include an aliphatic polyisocyanate compound such as hexamethylene diisocyanate, 2,2,4-trimethylhexanediisocyanate, 2,4,4-trimethylhexamethylenediisocyanate, lysine diisocyanatomethyl ester, lysine triisocyanate, m-xylylene diisocyanate, α,α,α',α'-tetramethylxylenediisocyanate, bis(isocyanatomethyl)naphthalene, mesitylenetriisocyanate, bis(isocyanatomethyl)sulfide, bis(isocyanatoethyl)sulfide, bis(isocyanatomethyl)disulfide, bis(isocyanatoethyl)disulfide, bis(isocyanatomethylthio)methane, bis(isocyanatoethylthio)methane, bis(isocyanatoethylthio)ethane, and bis(isocyanatomethylthio)ethane; an alicyclic polyisocyanate compound such as isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane;
an aromatic polyisocyanate compound such as diphenylsulfide-4,4-diisocyanate;
a heterocyclic polyisocyanate compound such as 2,5-diisocyanatothiophene, 2,5-bis(isocyanatomethyl)thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane; and the like.

A polyol compound is at least one kind of aliphatic or alicyclic alcohols. Specifically, polyol compound may include a straight or branched chain aliphatic alcohol, an alicyclic alcohol, an alcohol obtained by adding ethylene oxide, propylene oxide, or ε-caprolactone to these alcohols, and the like.

A straight or branched chain aliphatic alcohol may include ethylene glycol, diethylene glycol, triethylene glycol, propylene glycol, dipropylene glycol, tripropylene glycol, 1,3-propanediol, 2,2-dimethyl-1,3-propanediol, 2,2-diethyl-1,3-propanediol, 1,2-butanediol, 1,3-butanediol, 1,4-butanediol, 3-methyl-1,3-butanediol, 1,2-pentanediol, 1,3-pentanediol, 1,5-pentanediol, 2,4-pentanediol, 2-methyl-2,4-pentanediol, 3-methyl-1,5-pentanediol, 1,6-hexanediol, 2,5-hexanediol, glycerol, diglycerol, polyglycerol, trimethylolpropane, pentaerythritol, di(trimethylolpropane), and the like.

An alicyclic alcohol may include 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, 1,4-cyclohexanedimethanol, and the like.

A polyol compound may is used a compound obtained by adding ethylene oxide, propylene oxide, or ε-caprolactone to these alcohols. For example, the polyol compound may include an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone-modified glycerol, caprolactone-modified trimethylolpropane, caprolactone-modified pentaerythritol, and the like.

A polythiol compound may include an aliphatic polythiol compound such as methanedithiol, 1,2-ethanedithiol, 1,2,3-propanetrithiol, 1,2-cyclohexanedithiol, bis(2-mercaptoethyl)ether, tetrakis(mercaptomethyl)methane, diethyleneglycolbis(2-mercaptoacetate), diethyleneglycolbis(3-mercaptopropionate), ethyleneglycolbis(2-mercaptoacetate), ethyleneglycolbis(3-mercaptopropionate), trimethylolpropanetris(2-mercaptoacetate), trimethylolpropanetris(3-mercaptopropionate), trimethylolethanetris(2-mercaptoacetate), trimethylolethanetris(3-mercaptopropionate), pentaerythritoltetrakis(2-mercaptoacetate), pentaerythritoltetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,2,3-tris(mercaptomethylthio)propane, 1,2,3,-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, thioglycolic acid thereof and ester of mercaptopropionic acid, hydroxymethylsulfidebis(2-mercaptoacetate), hydroxymethylsulfidebis(3-mercaptopropionate), hydroxyethylsulfidebis(2-mercaptoacetate), hydroxyethylsulfidebis(3-mercaptopropionate), hydroxymethyldisulfidebis(2-mercaptoacetate), hydroxymethyldisulfidebis(3-mercaptopropionate), hydroxyethyldisulfidebis(2-mercaptoacetate), hydroxyethyldisulfidebis(3-mercaptopropionate), 2-mercaptoethyletherbis(2-mercaptoacetate), 2-mercaptoethyletherbis(3-mercaptopropionate), thiodiglycolic acid bis(2-mercaptoethylester), thiodipropionic acid bis(2-mercaptoethylester), dithiodiglycolic acid bis(2-mercaptoethylester), dithiodipropionic acid bis(2-mercaptoethylester), 1,1,3,3,-tetrakis(mercaptomethylthio)propane, 1,1,2,2,-tetrakis(mercaptomethylthio)ethane, 4,6-bis(mercaptomethylthio)-1,3-dithiane, tris(mercaptomethylthio)methane, and tris(mercaptoethylthio)methane; an aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluenedithiol, 3,4-toluenedithiol, 1,5-naphthalenedithiol, and 2,6-naphthalenedithiol;
a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane; and the like.

In present embodiment, polyurethane and polythiourethane may be obtained by using a polymerization catalyst, or may not by using a polymerization catalyst. In addition, these may contain an arbitrary additive such as an internal release agent and a bluing agent.

Polysulfide can be obtained by ring-opening polymerization of a polyepithio compound or a polythietane compound which are polymerizable compounds. In the composition for an optical material, the following polymerizable compounds which are used to form these resins may be included.

A polyepithio compound may include an epithioethylthio compound such as bis(1,2-epithioethyl)sulfide, bis(1,2-epithioethyl)disulfide, bis(epithioethylthio)methane, bis(epithioethylthio)benzene, bis[4-(epithioethylthio)phenyl]sulfide, and bis[4-(epithioethylthio)phenyl]methane;
a chain aliphatic 2,3-epithiopropylthio compound such as bis(2,3-epithiopropyl)sulfide, bis(2,3-epithiopropyl)disulfide, bis(2,3-epithiopropylthio)methane, 1,2-bis(2,3-epithiopropylthio)ethane, 1,2-bis(2,3-epithiopropylthio)propane, 1,3-bis(2,3-epithiopropylthio)propane, 1,3-bis(2,3-epithiopropylthio)-2-methylpropane, 1,4-bis(2,3-epithiopropylthio)butane, 1,4-bis(2,3-epithiopropylthio)-2-methylbutane, 1,3-bis(2,3-epithiopropylthio)butane, 1,5-bis(2,3-epithiopropylthio)pentane, 1,5-bis(2,3-epithiopropylthio)-2-methylpentane, 1,5-bis(2,3-epithiopropylthio)-3-thiapentane, 1,6-bis(2,3-epithiopropylthio)hexane, 1,6-bis(2,3-epithiopropylthio)-2-methylhexane, 1,8-bis(2,3-epithiopropylthio)-3,6-dithiaoctane, 1,2,3-tris(2,3-epithiopropylthio)propane, 2,2-bis(2,3-epithiopropylthio)-1,3-bis(2,3-epithioprop ylthiometh yl)propane, 2,2-bis(2,3-epithiopropylthiomethyl)-1-(2,3-epithiopropylthio)bu tane, 1,5-bis(2,3-epithiopropylthio)-2-(2,3-epithiopropylthiomethyl)-3 -thiapentane, 1,5-bis(2,3-epithiopropylthio)-2,4-bis(2,3-epithiopropylthiometh yl)-3-thiapentane, 1-(2,3-epithiopropylthio)-2,2-bis(2,3-epithiopropylthiomethyl)-4 -thiahexane, 1,5,6-tris(2,3-epithiopropylthio)-4-(2,3-epithiopropylthiomethyl )-3-thiahexane, 1,8-bis(2,3-epithiopropylthio)-4-(2,3-epithiopropylthiomethyl)-3 ,6-dithiaoctane, 1,8-bis(2,3-epithiopropylthio)-4,5-bis(2,3-epithiopropylthiometh yl)-3,6-dithiaoctane, 1,8-bis(2,3-epithiopropylthio)-4,4-bis(2,3-epithiopropylthiometh yl)-3,6-dithiaoctane, 1,8-bis(2,3-epithiopropylthio)-2,5-bis(2,3-epithiopropylthiometh yl)-3,6-dithiaoctane, 1,8-bis(2,3-epithiopropylthio)-2,4,5-tris(2,3-epithiopropylthiom ethyl)-3,6-dithiaoctane, 1,1,1-tris[[2-(2,3-epithiopropylthio)ethyl]thiomethyl]-2-(2,3-ep ithiopropylthio)ethane, 1,1,2,2-tetrakis[[2-(2,3-epithiopropylthio)ethyl]thiomethyl]etha ne, 1,11-bis(2,3-epithiopropylthio)-4,8-bis(2,3-epithiopropylthiomet hyl)-3,6,9-trithiaundecane, 1,11-bis (2,3-epithiopropylthio)-4,7-bis (2,3-epithiopro pylthiomet hyl)-3,6,9-trithiaundecane, and 1,11-bis (2,3-epithiopropylthio)-5,7-bis (2,3-epithiopropylthiomet hyl)-3,6,9-trithiaundecane;
an alicyclic 2,3-epithiopropylthio compound such as 1,3-bis(2,3-epithiopropylthio)cyclohexane, 1,4-bis(2,3-epithiopropylthio)cyclohexane, 1,3-bis(2,3-epithiopropylthiomethyl)cyclohexane, 1,4-bis(2,3-epithiopropylthiomethyl)cyclohexane, 2,5-bis(2,3-epithiopropylthiomethyl)-1,4-dithiane, 2,5-bis[[2-(2,3-epithiopropylthio)ethyl]thiomethyl]-1,4-dithiane, and 2,5-bis(2,3-epithiopropylthiomethyl)-2,5-dimethyl-1,4-dithiane;
an aromatic 2,3-epithiopropylthio compound such as 1,2-bis(2,3-epithiopropylthio)benzene, 1,3-bis(2,3-epithiopropylthio)benzene, 1,4-bis(2,3-epithiopropylthio)benzene, 1,2-bis(2,3-epithiopropylthiomethyl)benzene, 1,3-bis(2,3-epithiopropylthiomethyl)benzene, 1,4-bis(2,3-epithiopropylthiomethyl)benzene, bis[4-(2,3-epithiopropylthio)phenyl]methane, 2,2-bis[4-(2,3-epithiopropylthio)phenyl]propane, bis[4-(2,3-epithiopropylthio)phenyl]sulfide, bis[4-(2,3-epithiopropylthio)phenyl]sulfone, and 4,4'-bis(2,3-epithiopropylthio)biphenyl;
a chain aliphatic 2,3-epithiopropyloxy compound such as bis(2,3-epithiopropyl)ether, bis(2,3-epithiopropyloxy)methane, 1,2-bis(2,3-epithiopropyloxy)ethane, 1,2-bis(2,3-epithiopropyloxy)propane, 1,3-bis(2,3-epithiopropyloxy)propane, 1,3-bis(2,3-epithiopropyloxy)-2-methylpropane, 1,4-bis(2,3-epithiopropyloxy)butane, 1,4-bis(2,3-epithiopropyloxy)-2-methylbutane, 1,3-bis(2,3-epithiopropyloxy)butane, 1,5-bis(2,3-epithiopropyloxy)pentane, 1,5-bis(2,3-epithiopropyloxy)-2-methylpentane, 1,5-bis(2,3-epithiopropyloxy)-3-thiapentane, 1,6-bis(2,3-epithiopropyloxy) hexane, 1,6-bis(2,3-epithiopropyloxy)-2-methylhexane, 1,8-bis(2,3-epithiopropyloxy)-3,6-dithiaoctane, 1,2,3-tris(2,3-epithiopropyloxy)propane, 2,2-bis(2,3-epithiopropyloxy)-1,3-bis(2,3-epithiopropyloxymethyl )propane, 2,2-bis(2,3-epithiopropyloxymethyl)-1-(2,3-epithiopropyloxy)buta ne, 1,5-bis(2,3-epithiopropyloxy)-2-(2,3-epithiopropyloxymethyl)-3-t hiapentane, 1,5-bis(2,3-epithiopropyloxy)-2,4-bis(2,3-epithiopropyloxymethyl )-3-thiapentane, 1-(2,3-epithiopropyloxy)-2,2-bis(2,3-epithiopropyloxymethyl)-4-t hiahexane, 1,5,6-tris(2,3-epithiopropyloxy)-4-(2,3-epithiopropyloxymethyl)-3-thiahexane, 1,8-bis(2,3-epithiopropyloxy)-4-(2,3-epithiopropyloxymethyl)-3,6 -dithiaoctane, 1,8-bis(2,3-epithiopropyloxy)-4,5-bis(2,3-epithiopropyloxymethyl )-3,6-dithiaoctane, 1,8-bis(2,3-epithiopropyloxy)-4,4-bis(2,3-epithiopropyloxymethyl )-3,6-dithiaoctane, 1,8-bis(2,3-epithiopropyloxy)-2,5-bis(2,3-epithiopropyloxymethyl )-3,6-dithiaoctane, 1,8-bis(2,3-epithiopropyloxy)-2,4,5-tris (2,3-epithiopr opyloxymet hyl)-3,6-dithiaoctane, 1,1,1-tris[[2-(2,3-epithiopropyloxy)ethyl]thiomethyl]-2-(2,3-epi thiopropyloxy)ethane, 1,1,2,2-tetrakis[[2-(2,3-epithiopropyloxy)ethyl]thiomethyl]ethan e, 1,11-bis(2,3-epithiopropyloxy)-4,8-bis (2,3-epithioprop yloxymethy l)-3,6,9-trithiaundecane, 1,11-bis(2,3-epithiopropyloxy)-4,7-bis (2,3-epithioprop yloxymethy l)-3,6,9-trithiaundecane, and 1,11-bis(2,3-epithiopropyloxy)-5,7-bis (2,3-epithioprop yloxymethy 1)-3,6,9-trithiaundecane;
an alicyclic 2,3-epithiopropyloxy compound such as 1,3-bis(2,3-epithiopropyloxy)cyclohexane, 1,4-bis(2,3-epithiopropyloxy)cyclohexane, 1,3-bis(2,3-epithiopropyloxymethyl)cyclohexane, 1,4-bis(2,3-epithiopropyloxymethyl)cyclohexane, 2,5-bis(2,3-epithiopropyloxymethyl)-1,4-dithiane, 2,5-bis[[2-(2,3-epithiopropyloxy)ethyl]thiomethyl]-1,4-dithiane, and 2,5-bis(2,3-epithiopropyloxymethyl)-2,5-dimethyl-1,4-dithiane;
an aromatic 2,3-epithiopropyloxy compound such as 1,2-bis(2,3-epithiopropyloxy)benzene, 1,3-bis(2,3-epithiopropyloxy)benzene, 1,4-bis(2,3-epithiopropyloxy)benzene, 1,2-bis(2,3-epithiopropyloxymethyl)benzene, 1,3-bis(2,3-epithiopropyloxymethyl)benzene, 1,4-bis(2,3-epithiopropyloxymethyl)benzene, bis[4-(2,3-epithiopropyloxy)phenyl]methane, 2,2-bis[4-(2,3-epithiopropyloxy)phenyl]propane, bis[4-(2,3-epithiopropyloxy)phenyl]sulfide, bis[4-(2,3-epithiopropyloxy)phenyl]sulfone, and 4,4'-bis(2,3-epithiopropyloxy)biphenyl; and the like.

As a polythietane compound, a metal-containing thietane compound or a nonmetal thietane compound may be used.

As disclosed in WO2005-95490 or Japanese Unexamined Patent Publication No. 2003-327583, these polythietane compounds contain one or more thietanyl groups in a molecule. Preferably, the compound contains two or more thietanyl groups in total. For example, the compound may include a sulfide-based thietane compound such as bisthietanylsulfide, bis(3-thietanylthio)disulfide, bis(3-thietanylthio)methane, and 3-(((3'-thietanylthio)methylthio)methylthio)thietane; a polysulfide-based thietane compound such as bis(3-thietanyl)disulfide, bis(3-thietanyl)trisulfide, bis(3-thietanyl)tetrasulfide, and bis(3-thietanyl)pentasulfide; and the like.

### <Composition for an optical material>

The composition for an optical material of present embodiment includes the phosphor, the ultraviolet light absorber, and the resin for optical material or the polymerizable compound (resin monomer) . Furtheremore, as other components, a resin modifier and the like may also be included. The composition for an optical material can be obtained by mixing these components using a predetermined method.

The mixing order and the mixing method of components containing in the composition are not particularly limited as long as the components can be uniformly mixed, and the mixing may be performed using a well-known method. As a well-known method, for example, there is a method of producing a masterbatch containing a predetermined amount of an additive and then dispersing and dissolving the masterbatch in a solvent, and the like. For example, in the case of a polyurethane resin, there is a method of producing a masterbatch by dispersing and dissolving an additive in a polyisocyanate compound, and the like.

In present embodiment, in order to obtain polyurethane and polythiourethane, a polymerization catalyst may be used, or may not be used.

### (Other Components)

### (Internal Release Agent)

A polymerizable composition of present embodiment may include an internal release agent for improving mold releasability from a mold after molding.

An internal release agent may be employed acidic phosphate esters. The acidic phosphate esters may include phosphate monoester and phosphate diester, and these esters may be used singly or in a combination of two or more types thereof.

For example, the internal release agent may be employed ZelecUN manufactured by Stepan Company, an MR internal release agent manufactured by Mitsui Chemicals, Inc., JP series manufactured by Johoku Chemical Co., Ltd., Phosphanol series manufactured by TOHO Chemical Industry Co., Ltd., AP and DP series manufactured by Daihachi Chemical Industry Co., Ltd., and the like.

### (Resin Modifier)

In addition, a resin modifier may be added to the polymerizable composition of present embodiment in a range in which the effects of present embodiment are not hindered, in order to control various properties such as optical physical properties, impact resistance, and specific gravity of the obtained resin and adjust the viscosity or pot life of the composition.

A resin modifier may include, for example, an olefin compound and the like including an episulfide compound, an alcohol compound, an amine compound, an epoxy compound, an organic acid and anhydride thereof, a (meth)acrylate compound, and the like.

### (Light Stabilizer)

As a light stabilizer, a hindered amine-based compound may be used. A hindered amine-based compound may be employed as commercially available products, Lowilite 76 and Lowilite 92 manufactured by Chemtura Corporation, Tinuvin 144, Tinuvin 292, and Tinuvin 765 manufactured by BASF Japan Ltd., ADK STAB LA-52 and LA-72 manufactured by ADEKA Corporation, JF-95 manufactured by Johoku Chemical Co., Ltd., and the like.

### (Bluing Agent)

As a bluing agent, a bluing agent which has an absorption band in a wavelength range from orange to yellow in the visible light region and has a function of adjusting the hue of the optical material made of a resin may be employed. More specifically, the bluing agent includes a material which exhibits colors from blue to purple.

The composition for an optical material of present embodiment may contain the ultraviolet light absorber in a proportion of two or more times, and preferably three or more times the weight of the phosphor. Since the ultraviolet light absorber is contained in the above-mentioned amount, the blue light emissions from the phosphor which may cause unnaturalness can be suppressed, and an optical material which is colorless and transparent can be obtained. In addition, from the viewpoint of effects on the mechanical strength and the like of the optical material, the ultraviolet light absorber is contained in a proportion of 1500 or less times the weight of the phosphor.

Since the molded product obtained from the composition for an optical material includes the phosphor having the above-described properties and the ultraviolet light absorber, a range from harmful ultraviolet rays to blue light having a wavelength of about 420 nm can be more effectively cut. Furthermore, due to a synergistic effect with blue light emissions from the phosphor, coloring of the optical material can be suppressed. Therefore, an optical material which is colorless and transparent and has excellent appearance can be obtained.

In addition, from the viewpoint of the effects of the present invention, the phosphor may be contained in a proportion of 0.00001 parts by weight to 1 part by weight, and preferably, 0.0001 parts by weight to 0.1 parts by weight with respect to 100 parts by weight as the total weight of the resin for optical material or the polymerizable compound.

In order to allow the molded product obtained from the composition for an optical material to contain the phosphor and the ultraviolet light absorber, a method of mixing and polymerizing the composition for an optical material containing the phosphor, the ultraviolet light absorber, and the polymerizable compound, or a method of curing the composition for an optical material containing the phosphor, the ultraviolet light absorber, and the resin for optical material may be performed.

### <Uses>

The molded product obtained from the composition for an optical material of present embodiment includes the phosphor, the ultraviolet light absorber, and the resin for optical material, and may be used as the optical material. The optical material can be used for, for example, various plastic lenses such as plastic spectacle lenses, goggles, spectacle lenses for vision correction, lenses for imaging apparatus, Fresnel lenses for liquid crystal projector, lenticular lenses, and contact lenses, sealants for light emitting diode (LED), optical waveguides, optical adhesives used for bonding of optical lenses or optical waveguides, antireflection films used for optical lenses and the like, transparent coating used for members (a substrate, a light guide plate, a film, a sheet, and the like) of liquid crystal display devices, sheets or films stuck to the front glass of cars or to helmet for motorcycles, transparent substrates, and the like.

In the above-described molded product (optical material), at a thickness of 2 mm, the light transmittance at a wavelength of 440 nm is 80% or higher, and preferably, 85% or higher, the light transmittance at a wavelength of 420 nm is 70% or lower, and preferably, 50% or lower, and the light transmittance at a wavelength of 410 nm is 5% or lower, and preferably, 2% or lower. When the transmittance is in the above ranges, a strong effect in blocking a range from harmful ultraviolet rays to blue light having a wavelength of about 420 nm is obtained, and excellent colorless and transparent appearance is achieved. In addition, since the light transmittance at a wavelength of 440 nm is 80% or higher, a molded product (optical material) which is colorless and transparent and thus has excellent appearance can be obtained. In addition, these value ranges can be arbitrarily combined.

Since the optical material of present embodiment includes the phosphor having the above-described properties and the ultraviolet light absorber, a range from harmful ultraviolet rays to blue light having a wavelength of about 420 nm can be more effectively cut, and thus an optical material which is colorless and transparent and has excellent appearance can be obtained. Therefore, when a light source including blue light is observed through the optical material (plastic spectacle lens), eye strain can be effectively improved compared to a plastic spectacle lens which does not contain the phosphor and the ultraviolet light absorber.

Furthermore, since the optical material of present embodiment contains the above-mentioned amount of the ultraviolet light absorber, light emissions from the phosphor which may cause unnaturalness can be suppressed, and thus an optical material which is colorless and transparent can be obtained.

The optical material of present embodiment can be appropriately used as a plastic lens including a lens substrate, and a film layer and a coating layer which are optionally laminated over the lens substrate. The above-described phosphor and ultraviolet light absorber may be contained in any of the lens substrate and the film layer, and the phosphor and/or the ultraviolet light absorber may further be contained in the coating layer. From the viewpoint of the above-described effects, the phosphor may be contained in a proportion of 0.00001 parts by weight to 1 part by weight, and preferably, 0.0001 parts by weight to 0.1 parts by weight with respect to 100 parts by weight of the optical material.

As the plastic lens of present embodiment, the following configurations may be employed.

Plastic lens A: A lens substrate made of the composition for an optical material is provided.

Plastic lens B: A film or a layer made of the composition for an optical material is provided over at least one surface of the surfaces of a lens substrate (excluding the lens substrate obtained from the composition for an optical material).

Plastic lens C: A lens substrate (excluding the lens substrate obtained from the composition for an optical material) is laminated over both surfaces of a film made of the composition for an optical material.

The optical material may be appropriately used for the plastic spectacle lens.

### (Plastic Lens A)

A method of producing the plastic lens A including the lens substrate made of the composition for an optical material is not particularly limited, and as a preferable producing method, casting polymerization using a mold for lens casting may be employed. The lens substrate can be comprised of polyurethane, polythiourethane, polysulfide, poly(meth)acrylate, or the like, and the composition for an optical material containing the phosphor, the ultraviolet light absorber, and the resin for optical material or the polymerizable compound may be used.

Specifically, the composition for an optical material is injected into the cavity of a molding mold held by a gasket, tape, or the like. At this time, depending on the physical properties required to the plastic lens to be obtained, it is preferable to optionally perform a degassing treatment under reduced pressure, a filtration treatment under increased or reduced pressure, and the like in many cases.

After the composition is injected, the mold for casting a lens is heated in a heatable device in an oven or in water according to a predetermined temperature program, such that the composition is cured and molded. If necessary, the resin-molded product may be subjected to a treatment such as annealing.

In the present embodiment, in molding a resin, in addition to the aforementioned "other components", various additives such as a chain extender, a crosslinking agent, an antioxidant, an oil-soluble dye, a filler, and adhesiveness-improving agent can be added according to the purpose, similarly to the known molding methods.

Furthermore, the plastic lens A of the present embodiment may include various coating layers over the lens substrate formed of the composition for an optical material, according to the purpose or use thereof. The phosphor may be contained in the coating layers. The coating layers containing the phosphor and/or the ultraviolet light absorber may be prepared by using a coating material (composition) containing the phosphor and/or the ultraviolet light absorber, or may be prepared by forming a coating layer containing the ultraviolet light absorber as necessary and thereafter immersing a plastic lens to which the coating layer is laminated in a dispersion liquid obtained by dispersing the phosphor in water or a solvent so as to allow the coating layer to be impregnated with the phosphor.

### (Plastic Lens B)

The plastic lens B of the present embodiment includes a film or layer formed of the composition for an optical material, over at least one surface of the lens substrate. The lens substrate is not formed of the composition for an optical material of the present embodiment.

Examples of manufacturing methods of the plastic lens B include (1) a method in which a lens substrate is manufactured, and then a film or sheet formed of the composition for an optical material is stuck over at least one surface of the lens substrate; (2) a method in which a film or sheet composed of the composition for an optical material is disposed along the inner wall at one side of the cavity of a molding mold which is held by a gasket or tape as described later, then a polymerizable composition is injected into the cavity, and the composition is cured; and the like.

The film or sheet formed of the composition for an optical material that is used in the method (1) is not particularly limited. However, the film or sheet can be obtained by using pellets of the composition for an optical material obtained by melt kneading, impregnation, or the like, by various methods known in the related art. Specific examples of the various methods known in the related art include molding methods such as an injection molding method, a profile extrusion molding method, a pipe molding method, a tube molding method, a coating molding method for different types of molded products, an injection blow molding method, a direct blow molding method, a T-die sheet or film molding method, an inflation film molding method, and a press molding method. The obtained film or sheet contains a polyolefin, and the like.

The lens substrate can be obtained from known optical resins, and examples of the optical resins include a (thio)urethane, a polysulfide, and the like.

The film or sheet formed of the composition for an optical material can be stuck over the surface of the lens substrate by a known method.

The cast polymerization in the method (2) can be performed in the same manner as the method used for the plastic lens A. Examples of compositions used in the cast polymerization include compositions containing polymerizable compounds (the compositions do not contain the phosphor and the ultraviolet light absorber).

Furthermore, the plastic lens B of the present embodiment may include various coating layers over the lens substrate or over a "film or layer" formed of the composition for an optical material, according to the purpose or use thereof. Similarly to the plastic lens A, the plastic lens B can contain the phosphor and/or the ultraviolet light absorber in the coating layers.

### (Plastic Lens C)

In the plastic lens C in present embodiment, the lens substrate (excluding the lens substrate obtained from the composition for an optical material) is laminated over both surfaces of the film made of the composition for an optical material. The plastic lens C may be used as a plastic polarizing lens.

Examples of manufacturing methods of the plastic lens C include (1) a method in which a lens substrate is manufactured, and then the lens substrate is stuck over both surfaces of a film or sheet formed of the composition for an optical material; (2) a method in which a film or sheet formed of the composition for an optical material is disposed in the cavity of a molding mold held by a gasket, tape, or the like in a state of being separated from both of the inner wall of the mold, then a polymerizable composition is injected into the cavity, and the composition is cured; and the like.

As the film or sheet made of the composition for an optical material and the lens substrate that are used in the method (1), it is possible to use the same film or sheet and the same lens substrate as used in the method (1) used for the plastic lens B. The film or sheet formed of the composition for an optical material can be stuck over the surface of the lens substrate by a known method.

Specifically, the method (2) can be performed as below.

In the space of a mold for casting a lens that is used in the manufacturing method of the plastic lens A, the film or sheet made of the composition for an optical material is disposed, such that both surfaces of the film or sheet becomes parallel to the inner surface of the mold at the front side facing the film or sheet.

Thereafter, in the space of the mold for casting a lens, the composition (which does not contain the phosphor and the ultraviolet light absorber) containing the polymerizable compound is injected into two spaces portions between the mold and a polarizing film by a predetermined injection device.

Subsequently, after the composition is injected, the mold for casting a lens is heated in a heatable device in an oven or in water according to a predetermined temperature program, such that the composition is cured and molded. If necessary, the resin-molded product may be subjected to a treatment such as annealing.

Furthermore, the plastic lens C of the present embodiment may include various coating layers over the lens substrate, according to the purpose or use thereof. Similarly to the plastic lens A, the plastic lens C can contain the phosphor and/or the ultraviolet light absorber in the coating layers.

### [Plastic Spectacle Lens]

A plastic spectacle lens can be obtained by using the plastic lens of present embodiment.

The plastic spectacle lens of present embodiment is used when a light source including blue light is observed during outdoor operations, office work, smartphone operations, or the like, and thus can suppress eye strain. In addition, as necessary, the coating layer may also be provided over one surface or both surfaces.

Specific examples of the coating layer include a primer layer, a hard coat layer, an antireflection layer, an antifogging coat layer, an antifouling layer, a water repellent layer, and the like. These coating layers may be used singly, or a plurality of coating layers may be used in the form of a multilayer. When the coating layer is provided over both surfaces of the lens, each of the surfaces may be provided with the same coating layer or with different coating layers.

For each of the coating layers, the phosphor and/or the ultraviolet light absorber used in present embodiment, an infrared absorber for protecting the eye from infrared rays, a light stabilizer or an antioxidant for improving weather resistance of the lens, a dye or a pigment for making the lens more fashionable, a photochromic dye or a photochromic pigment, an antistatic agent, and other known additives for improving performance of the lens can be concurrently used. For a layer subjected to coating, various leveling agents for improving coating properties may be used.

Generally, the primer layer is formed between the hard coat layer, which will be described later, and the lens. The primer layer is a coating layer for improving adhesiveness between the lens and the hard coat layer which is formed over the primer layer, and can also improve impact resistance in some cases. For the primer layer, any material can be used as long as it exhibits a high degree of adhesiveness with respect to the obtained lens. However, generally, a urethane-based resin, an epoxy-based resin, a polyester-based resin, a melamine-based resin, a primer composition containing polyvinyl acetal as a main component, or the like is used. For the primer composition, an appropriate solvent not exerting an influence on the lens may be used so as to adjust viscosity of the composition. Needless to say, the composition not containing a solvent may be used.

The primer layer can be formed by any method including a coating method and a dry method. When the coating method is used, the lens is coated with the primer composition by a known coating method such as spin coating or dip coating, and then the composition is solidified to form a primer layer. When the dry method is used, the primer layer is formed by a known dry method such as a CVD method or a vacuum deposition method. In forming the primer layer, in order to improve adhesiveness, the surface of lens may be optionally subjected to a pre-treatment such as an alkali treatment, a plasma treatment, or an ultraviolet treatment.

The hard coat layer is a coating layer for providing functions, such as scratch resistance, abrasion resistance, moisture resistance, resistance to hot water, heat resistance, and weather resistance, to the lens surface.

Generally, for the hard coat layer, a hard coat composition is used which contains a curable organic silicon compound and one or more kinds of fine particles of an oxide of an element selected from the group of elements including Si, Al, Sn, Sb, Ta, Ce, La, Fe, Zn, W, Zr, In, and Ti and/or one or more kinds of fine particles constituted with a composite oxide of two or more elements selected from the group of elements.

The hard coat composition preferably contains at least one of amines, amino acids, metal acetyl acetonate complexes, organic acid metal salts, perchloric acids, salts of perchloric acids, acids, metal chlorides, and polyfunctional epoxy compounds, in addition to the aforementioned components. For the hard coat composition, an appropriate solvent that does not exert an influence on the lens may be used, and the composition not containing a solvent may be used.

Generally, the lens is coated with the hard coat composition by a known coating method such as spin coating or dip coating, and then the composition is cured, whereby the hard coat layer is formed. Examples of curing methods include thermal curing, curing methods performed by irradiation of energy rays such as ultraviolet rays or visible rays, and the like. In order to inhibit formation of interference fringes, a difference between the refractive index of the hard coat layer and the refractive index of the lens is preferably within a range of ±0.1.

Generally, the antireflection layer is optionally formed over the hard coat layer. The antireflection layer is classified into an inorganic antireflection layer and an organic antireflection layer. The inorganic antireflection layer is formed of an inorganic oxide such as SiO₂ or TiO₂ by a dry method such as a vacuum deposition method, a sputtering method, an ion plating method, an ion beam-assisted method, and a CVD method. The organic antireflection layer is formed of a composition, which contains an organic silicon compound and fine silica-based particles having internal cavities, by a wet method.

The antireflection layer is composed of a single layer or multiple layers. When it is used in the form of a single layer, a value obtained by subtracting the refractive index of the antireflection layer from the refractive index of the hard coat layer is preferably at least equal to or greater than 0.1. In order to cause the antireflection layer to effectively perform an antireflection function, it is preferable to constitute the antireflection film with multiple films, and in this case, a film with a low refractive index and a film with a high refractive index are alternately laminated on each other. Even in this case, a difference in refractive index between the film with a low refractive index and the film with a high refractive index is preferably equal to or greater than 0.1. Examples of the film with a high refractive index include films of ZnO, TiO₂, CeO₂, Sb₂O₅, SnO₂, ZrO₂, Ta₂O₅, and the like, and examples of the film with a low refractive index include films of SiO₂ and the like.

If necessary, an antifogging layer, an antifouling layer, or a water repellent layer may be formed over the antireflection film layer. Regarding the method for forming the antifogging layer, the antifouling layer, and the water repellent layer, the method, material, and the like used for treating these layers are not particularly limited as long as they do not exert a negative influence on the antireflection function. It is possible to use known methods and materials used for an antifogging treatment, an antifouling treatment, and a water repellency treatment. Examples of the methods used for the antifogging treatment and the antifouling treatment include a method of covering the surface with a surfactant; a method of giving water absorbing properties to the layer by adding a hydrophilic film to the surface of the layer; a method of improving the water absorbing properties by forming fine concavities and convexities over the surface of the layer; a method of giving water absorbing properties to the layer by utilizing photocatalytic activity; a method performing a super water repellency treatment over the layer to prevent water drops from adhering to the layer; and the like. Examples of the methods used for the water repellency treatment include a method of forming a layer having undergone the water repellency treatment comprised of a fluorine-containing silane compound or the like by vapor deposition or sputtering; a method of dissolving a fluorine-containing silane compound in a solvent and then coating a layer with the solution so as to form a layer having undergone the water repellency treatment; and the like.

### [Second Embodiment]

In present embodiment, an optical material can be prepared by using a composition for an optical material which contains a phosphor. In addition, various components described in the first embodiment may be used and the same configuration may be employed except that an ultraviolet light absorber is not contained in the composition for an optical material. This will be described below. In addition, description of the same cases as those in the above-described embodiment will not be repeated.

The optical material in present embodiment may be appropriately used as a plastic spectacle lens and includes a lens substrate, and a film layer and a coating layer which are optionally laminated over the lens substrate.

The plastic spectacle lens of present embodiment may be obtained by, for example, the following processes.
Process a: a lens substrate which contains a phosphor and a resin (a resin for optical material or a resin obtained from a polymerizable compound) is prepared.
Process b: the obtained lens substrate is impregnated with an ultraviolet light absorber.

In Process a, the composition for an optical material described in the first embodiment may be used except that the composition for an optical material does not contain the ultraviolet light absorber, and a lens substrate (molded product) can be obtained in the same manner as in the first embodiment.

In Process b, the obtained lens substrate is immersed in a dispersion liquid obtained by dispersing the ultraviolet light absorber in water or a solvent such that the lens substrate is impregnated with the ultraviolet light absorber, and the resultant is dried.

The amount of impregnated ultraviolet light absorber may be controlled to a desired impregnation amount according to the concentration of the ultraviolet light absorber in the dispersion liquid, the temperature of the dispersion liquid, and the amount of time for which the lens substrate is immersed. The impregnation amount is increased with increases in concentration, temperature, and immersion time. In a case where the impregnation amount is to be precisely controlled, the immersion is repeated several times under the conditions for a low impregnation amount.

In present embodiment, a step of forming a coating layer over at least one surface of the lens substrate impregnated with the ultraviolet light absorber may further be included.

In addition, a step of laminating the lens substrate impregnated with the ultraviolet light absorber over at least one surface, and preferably both surfaces of a film may also be included.

In the second embodiment, the optical material obtained in the manufacturing method includes the lens substrate, and the film layer and the coating layer which are optionally laminated over the lens substrate. In addition, the ultraviolet light absorber is contained in the vicinity of the surface of at least one surface of the lens substrate containing the phosphor. The amount of the ultraviolet light absorber with respect to the phosphor is not particularly limited as long as the ultraviolet light absorber is localized in the vicinity of the surface of at least one surface of the lens substrate and is adjusted so that the transmittance measured at a thickness of 2 mm satisfies the above features (1) to (3). The optical material can effectively suppress emissions from the phosphor which may cause unnaturalness and can be appropriately used as a plastic spectacle lens.

### [Third Embodiment]

In present embodiment, an optical material can be prepared by using a composition for an optical material which contains an ultraviolet light absorber. In addition, various components described in the first embodiment may be used and the same configuration may be employed except that a phosphor is not contained in the composition for an optical material. This will be described below. In addition, description of the same cases as those in the above-described embodiment will not be repeated.

The optical material in present embodiment may be used as a plastic lens which includes a lens substrate, and a film layer and a coating layer which are optionally laminated over the lens substrate. The phosphor or the ultraviolet light absorber may be contained in at least one of the lens substrate, the film layer, and the coating layer.

Specifically, a molded product (the lens substrate or an optical film) is prepared by using the composition for an optical material which contains the ultraviolet light absorber (does not contain the phosphor), the obtained molded product is then immersed in a dispersion liquid obtained by dispersing the phosphor in water or a solvent such that the molded product is impregnated with the phosphor, and the resultant is dried. The optical material can be prepared by using the molded product obtained as described above.

The amount of impregnated phosphor may be controlled to a desired impregnation amount according to the concentration of the phosphor in the dispersion liquid, the temperature of the dispersion liquid, and the amount of time for which the resin for optical material composition is immersed. The impregnation amount is increased with increases in concentration, temperature, and immersion time. In a case where the impregnation amount is to be precisely controlled, the immersion is repeated several times under the conditions for a low impregnation amount.

In present embodiment, a process of forming a coating layer over at least one surface of the lens substrate impregnated with the phosphor may further be included.

In addition, a process of laminating the lens substrate impregnated with the phosphor over at least one surface, and preferably both surfaces of a film may also be included.

In the third embodiment, the optical material obtained in the manufacturing method includes the lens substrate, and the film layer and the coating layer which are optionally laminated over the lens substrate. In addition, the phosphor is contained in the vicinity of the surface of at least one surface of the lens substrate containing the ultraviolet light absorber.

A phosphor-containing coating layer may also be formed over the optical material such as a plastic lens by using a coating material containing the phosphor.

While the embodiments of the present disclosure have been described above, the present invention is not limited to the above-described embodiments, and various aspects can also be employed in a range in which the effects of the present invention are not hindered.

### [Examples]

Hereinafter, the present invention will be described in more detail with reference to Examples. In addition, materials and evaluation methods used in Examples of the present invention are as follows.

### Phosphor

- TINOPAL OB (manufactured by Ciba Specialty Chemicals, 2,5-bis(5-t-butyl-2-benzoxazolyl)thiophene) with an excitation wavelength in a range from 245 nm to 445 nm, a fluorescence wavelength in a range from 390 nm to 605 nm, a maximum excitation wavelength of 380 nm, and a maximum fluorescence wavelength of 440 nm
- 7-diethylamino-4-methylcoumarin with an excitation wavelength in a range from 235 nm to 440 nm, a fluorescence wavelength in a range from 380 nm to 550 nm, a maximum excitation wavelength of 370 nm, and a maximum fluorescence wavelength of 425 nm

### Ultraviolet Light Absorber

- Viosorb583 (manufactured by Kyodo Chemical Co., Ltd., 2-(2'-hydroxy-5'-t-octylphenyl)benzotriazole)
- SEESORB106 (manufactured by SHIPRO Kasei Kaisha, LTD., 2,2',4,4'-tetrahydroxybenzophenone)

### Measurement of blue light cut ratio

A 2 mm-thick plano lens or a 2 mm-thick resin flat plate is produced, and the absorption spectrum thereof is measured with a UV-VIS spectrometer manufactured by JASCO Corporation. The average transmittance in a range from 380 nm to 500 nm is obtained, and a value obtained by subtracting the average transmittance from 100 is calculated as a blue light cut ratio.

### Measurement of Light Transmittance

A 2 mm-thick plano lens or a 2 mm-thick resin flat plate is produced, the absorption spectrum between 800 nm and 250 nm is measured with a UV-VIS spectrometer manufactured by JASCO Corporation, and the transmittance at each wavelength is measured.

### Measurement of Refractive Index and Abbe Number

Measurement was performed at 20°C by using a Pulfrich refractometer KPR-30 manufactured by Shimadzu Corporation.

### Measurement of Glass Transition Temperature (Tg)

Measurement was performed by a TMA penetration method (with a load of 50 g, a probe tip of 0.5 mmØ, and a temperature increase rate of 10°C/min) with a thermomechanical analysis analyzer TMA-60 manufactured by Shimadzu Corporation.

### (Example 1)

0.042 g of dibutyltin(II) dichloride, 0.084 g of ZelecUN (manufactured by Stepan Company), 1.05 g of Viosorb 583, and 0.0124 g of TINOPAL OB were accurately inserted into a flask which was sufficiently dried, 35.4 g of 2,5(6)-bis(isocyanatomethyl)-bicyclo[2.2.1]heptane was inserted thereinto, and the resultant was stirred and dissolved at 25°C for 1 hour. Thereafter, 16.7 g of pentaerythritoltetrakis(3-mercaptopropionate) and 17.9 g of 1,2-bis[(2-mercaptoethyl)thio]-3-mercaptopropane were added to the preparation, and the resultant was stirred at 25°C for 30 minutes such that a preparation was prepared.

The preparation was degassed at 600 Pa for 1 hour, and then was injected into a 6C plano glass mold having a center thickness of 2 mm and a diameter of 80 mm.

The temperature of the glass mold was gradually increased from 25°C to 120°C over 16 hours, and was held at 120°C for 4 hours. The glass mold was cooled to room temperature, and a plano lens was removed from the glass mold to be obtained. The blue light cut ratio was measured, and the result was 40.8%. In addition, the light transmittance at a wavelength of 440 nm was 88.4%, the light transmittance at a wavelength of 420 nm was 39.3%, and the light transmittance at a wavelength of 410 nm was 0.5%. The refractive index of the obtained lens was 1.598, the Abbe number thereof was 39, and Tg thereof was 112°C.

The lens was rounded into an appropriate shape by an edging machine manufactured by NIDEK Co., Ltd., and the resultant was mounted in a spectacle frame, thereby obtaining a sample glass.

### (Example 2)

The method described in Example 1 was performed by using 0.021 g of 7-diethylamino-4-methylcoumarin instead of TINOPAL OB. The other processes were performed in the same manner as in the method of Example 1. The blue light cut ratio of the obtained plano lens was 40.4%. In addition, the light transmittance at a wavelength of 440 nm was 84.6%, the light transmittance at a wavelength of 420 nm was 43.4%, and the light transmittance at a wavelength of 410 nm was 3.3%.

### (Example 3)

A plano lens was produced in the same manner as in Example 1 except that Viosorb 583 was not added thereto. The plano lens was immersed for 30 minutes into an ultraviolet light absorber-containing liquid which was obtained by dissolving 10.0 g of SEESORB106, 10.0 g of surfactant (SUNSOLT 7000 manufactured by Nicca Chemical Co., LTD.) and 20.0 g of benzyl alcohol in 1 liter of water and heating the resultant to 95°C. The plano lens was taken out, washed with water, washed with acetone, and thereafter dried, thereby obtaining a plano lens. The ultraviolet light absorber was present in the vicinity of the surface of the lens. The blue light cut ratio of the obtained plano lens was 41.4%. In addition, the light transmittance at a wavelength of 440 nm was 88.2%, the light transmittance at a wavelength of 420 nm was 41.8%, and the light transmittance at a wavelength of 410 nm was 0.8%.

### (Comparative Example 1)

The same method as in Example 1 was performed except that the amount of Viorsorb 583 was 0.02 g. The amount of the ultraviolet light absorber was 1.6 times the weight of the phosphor. The blue light cut ratio was 39.6%. In addition, the light transmittance at a wavelength of 440 nm was 87.6%, the light transmittance at a wavelength of 420 nm was 41.3%, and the light transmittance at a wavelength of 410 nm was 7.2%.

### (Comparative Example 2)

The method described in Example 1 was performed without using TINOPAL OB. Except for this, the method was performed in the same manner as in Example 1. The blue light cut ratio was 31.6%. In addition, the light transmittance at a wavelength of 440 nm was 89.0%, the light transmittance at a wavelength of 420 nm was 85.1%, and the light transmittance at a wavelength of 410 nm was 65.6%.

### Evaluation of Sample Lens

The sample lenses produced in Examples and Comparative Examples were mounted, and an operation of a personal computer provided with a liquid crystal display was continuously performed for 5 hours . The next day, the operation of the personal computer was continuously performed for 5 hours without mounting the lenses. Five persons A to E evaluated the sample lenses. A case where eye strain was not felt with the mounted sample lenses was evaluated as O, a case where no change in eye strain was felt even when the sample lenses were mounted was evaluated as Δ, and a case where eye strain was felt with the mounted sample lenses was evaluated as X.

In addition, the appearance of the sample lens obtained in each of Examples and Comparative Examples was visually evaluated.

**Table 1**

| | A | B | C | D | E | Appearance of sample lens |
|---|---|---|---|---|---|---|
| Example 1 | ○ | ○ | ○ | ○ | ○ | Colorless and transparent |
| Example 2 | ○ | ○ | ○ | ○ | ○ | Colorless and transparent |
| Example 3 | ○ | ○ | ○ | ○ | ○ | Colorless and transparent |
| Comparative Example 1 | X | Δ | X | X | Δ | Colored with blue due to fluorescence |
| Comparative Example 2 | Δ | X | Δ | X | Δ | Colorless and transparent |

From the above results, with the sample lenses obtained in Examples, eye strain was not felt and appearance was excellent compared to Comparative Examples.

This application is based upon and claims the benefit of priority from Japanese Patent Application No. 2013-036694 filed February 27, 2013.

## Claims

1. A plastic spectacle lens composed of an optical material comprising:
a phosphor which has an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm; and
an ultraviolet light absorber,
wherein a transmittance of the optical material measured at a thickness of 2 mm satisfies the following features (1) to (3):
(1) The light transmittance at a wavelength of 440 nm is 80% or higher,
(2) The light transmittance at a wavelength of 420 nm is 70% or lower, and
(3) The light transmittance at a wavelength of 410 nm is 5% or lower;
the plastic spectacle lens further comprising:
a lens substrate; and
optionally a film layer and a coating layer laminated over the lens substrate;
wherein at least one of the lens substrate, the film layer and the coating layer is obtained from a composition for an optical material which contains the phosphor having an excitation wavelength in a range from 220 nm to 500 nm, a fluorescence wavelength in a range from 380 nm to 650 nm, a maximum excitation wavelength in a range from 350 nm to 400 nm, and a maximum fluorescence wavelength in a range from 400 nm to 500 nm, the ultraviolet light absorber, and a resin for optical material or a polymerizable compound; and
wherein the resin for optical material is a poly (meth) acrylate or a polyolefin; and
wherein the polymerizable compound is a combination of a polyisocyanate compound and a polyol compound, a combination of a polyisocyanate compound and a polythiol compound, or a polyepithio compound and/or a polythietane compound.

2. The plastic spectacle lens composed of an optical material according to claim 1,
wherein the ultraviolet light absorber is contained in a proportion of two or more times a weight of the phosphor.

3. The plastic spectacle lens composed of an optical material according to claim 1 or 2,
wherein the phosphor contains benzoxazoles and/or coumarins.

4. The plastic spectacle lens composed of an optical material according to any one of claims 1 to 3,
wherein the ultraviolet light absorber is at least one type selected from a benzotriazole-based compound, a benzophenone-based compound, and a salicylic acid ester-based compound.

5. The plastic spectacle lens composed of an optical material according to any one of claims 1 and 3 to 4,
wherein the ultraviolet light absorber is contained in the vicinity of a surface of at least one surface of the lens substrate.

## Patentansprüche

1. Kunststoffbrillenlinse, die aus einem optischen Material besteht, das Folgendes umfasst:
einen Luminophor, der eine Anregungswellenlänge in einem Bereich von 220 nm bis 500 nm, eine Fluoreszenzwellenlänge in einem Bereich von 380 nm bis 650 nm, eine maximale Anregungswellenlänge in einem Bereich von 350 bis 400 nm und eine maximale Fluoreszenzwellenlänge in einem Bereich von 400 nm bis 500 nm aufweist; und
einen Ultraviolettlichtabsorber,
wobei die bei einer Dicke von 2 mm gemessene Durchlässigkeit des optischen Materials die folgenden Merkmale (1) bis (3) aufweist:
(1) die Lichtdurchlässigkeit bei einer Wellenlänge von 440 nm ist 80 % oder mehr,
(2) die Lichtdurchlässigkeit bei einer Wellenlänge von 420 nm ist 70 % oder weniger und
(3) die Lichtdurchlässigkeit bei einer Wellenlänge von 410 nm ist 5 % oder weniger;
wobei die Kunststoffbrillenlinse weiters Folgendes umfasst:
ein Linsensubstrat; und
gegebenenfalls eine Filmschicht und eine Beschichtungsschicht über das Linsensubstrat laminiert;
wobei zumindest eines aus dem Linsensubstrat, der Filmschicht und der Beschichtungsschicht aus einer Zusammensetzung für ein optisches Material erhalten ist, die den Luminophor mit einer Anregungswellenlänge in einem Bereich von 220 nm bis 500 nm, einer Fluoreszenzwellenlänge in einem Bereich von 380 nm bis 650 nm, einer maximalen Anregungswellenlänge in einem Bereich von 350 bis 400 nm und einer maximalen Fluoreszenzwellenlänge in einem Bereich von 400 nm bis 500 nm, den Ultraviolettlichtabsorber und ein Harz für optisches Material oder ein polymerisierbare Verbindung enthält; und
wobei das Harz für das optische Material ein Poly(meth)acrylat oder ein Polyolefin ist; und
wobei die polymerisierbare Verbindung eine Kombination aus einer Polyisocyanatverbindung und einer Polyolverbindung, eine Kombination aus einer Polyisocyanatverbindung und einer Polythiolverbindung oder eine Polyepithioverbindung und/oder eine Polythietanverbindung ist.

2. Kunststoffbrillenlinse, die aus einem optischen Material besteht, nach Anspruch 1,
wobei der Ultraviolettlichtabsorber in einem Anteil vom Zwei- oder Mehrfachen des Gewichts des Luminophors enthalten ist.

3. Kunststoffbrillenlinse, die aus einem optischen Material besteht, nach einem der Ansprüche 1 oder 2,
wobei der Luminophor Benzoxazole und/oder Cumarine enthält.

4. Kunststoffbrillenlinse, die aus einem optischen Material besteht, nach einem der Ansprüche 1 bis 3,
wobei der Ultraviolettlichtabsorber zumindest eine aus einer Verbindung auf Benzotriazolbasis, einer Verbindung auf Benzophenonbasis und einer Verbindung auf Salicylsäureesterbasis ausgewählte Art ist.

5. Kunststoffbrillenlinse, die aus einem optischen Material besteht, nach einem der Ansprüche 1 und 3 bis 4,
wobei der Ultraviolettlichtabsorber in der Nähe einer Oberfläche zumindest einer Oberfläche der Linsensubstrats enthalten ist.

## Revendications

1. Verre de lunette en plastique composé d'un matériau optique comprenant :
un luminophore qui a une longueur d'onde d'excitation dans une plage de 220 nm à 500 nm, une longueur d'onde de fluorescence dans une plage de 380 nm à 650 nm, une longueur d'onde d'excitation maximale dans une plage de 350 nm à 400 nm, et une longueur d'onde de fluorescence maximale dans une plage de 400 nm à 500 nm ; et
un absorbeur de lumière ultraviolette,
dans lequel une transmittance du matériau optique mesurée à une épaisseur de 2 mm satisfait les caractéristiques (1) à (3) suivantes :
(1) la transmittance de la lumière à une longueur d'onde de 440 nm est de 80 % ou plus,
(2) la transmittance de la lumière à une longueur d'onde de 420 nm est de 70 % ou moins, et
(3) la transmittance de la lumière à une longueur d'onde de 410 nm est de 5 % ou moins ;
le verre de lunette en plastique comprenant en outre :
un substrat de verre ; et
éventuellement une couche de film et une couche de revêtement stratifiées sur le substrat de verre ;
dans lequel au moins un du substrat de verre, de la couche de film et de la couche de revêtement est obtenu à partir d'une composition pour un matériau optique qui contient le luminophore ayant une longueur d'onde d'excitation dans une plage de 220 nm à 500 nm, une longueur d'onde de fluorescence dans une plage de 380 nm à 650 nm, une longueur d'onde d'excitation maximale dans une plage de 350 nm à 400 nm, et une longueur d'onde de fluorescence maximale dans une plage de 400 nm à 500 nm, l'absorbeur de lumière ultraviolette et une résine pour matériau optique ou un composé polymérisable ; et
dans lequel la résine pour matériau optique est un poly(méth)acrylate ou une polyoléfine ; et
dans lequel le composé polymérisable est une combinaison d'un composé polyisocyanate et d'un composé polyol, une combinaison d'un composé polyisocyanate et d'un composé polythiol, ou un composé polyépithio et/ou un composé polythiétane.

2. Verre de lunette en plastique composé d'un matériau optique selon la revendication 1,
dans lequel l'absorbeur de lumière ultraviolette est contenu dans une proportion de deux fois ou plus un poids du luminophore.

3. Verre de lunette en plastique composé d'un matériau optique selon la revendication 1 ou 2,
dans lequel le phosphore contient des benzoxazoles et/ou des coumarines.

4. Verre de lunette en plastique composé d'un matériau optique selon l'une quelconque des revendications 1 à 3,
dans lequel l'absorbeur de lumière ultraviolette est au moins un type choisi parmi un composé à base de benzotriazole, un composé à base de benzophénone et un composé à base d'ester d'acide salicylique.

5. Verre de lunette en plastique composé d'un matériau optique selon l'une quelconque des revendications 1 et 3 à 4,
dans lequel l'absorbeur de lumière ultraviolette est contenu au voisinage d'une surface d'au moins une surface du substrat de verre.
